# EUROPEAN PATENT SPECIFICATION

(11) **EP 2 734 358 B1**
(45) Date of publication and mention of the grant of the patent: **26.12.2018**
(21) Application number: 11778954.5
(22) Date of filing: 21.07.2011
(51) Int. Cl.: B29D 11/00, B29C 63/16, G02B 27/26, B29C 63/00, G02C 13/00

(54) **PRODUCTION OF AN OPHTHALMIC LENS SUITABLE FOR STEREOSCOPIC VISION**
HERSTELLUNG EINER OPHTHALMISCHEN LINSE FÜR STEREOSKOPISCHES SEHVERMÖGEN
PRODUCTION OF AN OPHTHALMIC LENS SUITABLE FOR STEREOSCOPIC VISION

(43) Date of publication of application: 28.05.2014
(73) Proprietor: Essilor International, 94220 Charenton-le-Pont (FR)
(72) Inventor: BEGON, Cédric, F-94220 Charenton-le-Pont (FR); NUNEZ-OLIVEROS, Matthieu, F-94220 Charenton-le-Pont (FR)
(74) Representative: Cabinet Plasseraud
(86) International application number: PCT/IB2011/002061
(87) International publication number: WO 2013/011346

(56) References cited:
- WO-A2-2007/024713
- US-A1- 2008 314 499
- US-A1- 2009 097 117
- US-A1- 2010 193 112

## Description

The present invention relates to a process for producing an ophthalmic lens which is also suitable for stereoscopic vision. It also relates to a method for producing pairs of spectacles which comprise such ophthalmic lenses.

Several principles are currently used for providing stereoscopic vision to a viewer while displaying images on a two-dimensional screen. In an usual manner, stereoscopic vision means three-dimensional vision rendering, obtained by supplying each one of the viewer's eyes with an image which is dedicated to this eye, and different from the image dedicated to the other eye. Both images correspond to the same scene but intercepted with respective sight directions with are separated by an angular shift. This angular shift reproduces that one which results from the spatial distance existing between both wearer's eyes. Then, stereoscopic vision requires that each eye perceives only an image sequence which is intended to this eye, but does not perceive another image sequence which is intended to the other eye, while both image sequences are produced so as to be perceived simultaneously.

Actually, several methods have been developed for making the two image sequences available for being perceived simultaneously. A first one of these methods consists in dedicating alternatively the successive lines of a framed display to both image sequences, and then displaying simultaneously two corresponding images pertaining respectively to the sequences in a line-interleaved manner. A second method consists in displaying the images while alternating between both sequences in time, with an image frequency high enough for each viewer's eye to perceive a continuously changing image.

Then, it is necessary to select for each eye only the images which are intended to it. Such selection function is produced by equipping the wearer with suitable spectacles, with each eyeglass of the spectacles capable of selecting the image sequence which is intended to the corresponding eye. One of the most efficient sequence selections is obtained by using light-polarization: the images of one sequence are all produced with clockwise-polarized light, and the images of the other sequence are all produced with counter-clockwise polarized light. Then both eyeglasses are provided with polarization filters: one filtering the clockwise-polarized light, and the other one filtering the counter-clockwise polarized light.

US 2010/0193112 discloses a method for producing an ophthalmic lens comprising a functional film.

US 2009/0097117 discloses a method of producing a stereoscopic filter.

In a known manner, a circular-polarization filter is produced by superposing along the propagation direction of the light first a quarter-wave retarding layer and then a linear-polarizing film. The quarter-wave retarding layer is made of a doubly light-refracting material - also called birefringent material - with a slow axis and a fast axis referring to the propagation speed values for the light when being polarized linearly along each one of these axes. The layer thickness is selected for a selected light frequency so that light polarized along the slow axis is affected with a quarter-wave delay with respect to light polarized along the fast axis, for the same propagation path. The slow and fast axes are perpendicular to each other, and are to be oriented at 45° or 135° with respect to the polarization axis of the linear-polarizing film. 45°-orientation leads to clockwise-polarization filtering, and 135° leads to counter-clockwise polarization filtering.. More precisely, the film of doubly light-refracting material changes the circular polarization of the incident light to linear polarization, with this latter being oriented along one of two perpendicular directions depending on the clock-wise or counter-clockwise polarization of the incident light. Then, the linear-polarizing film filters out or transmits the linear polarized light to the wearer's eye.

Attempts have been carried out for assembling a film of doubly light-refracting material with a lens by casting a thermosetting polymer between the lens and the film. But such casting processes require heating the assembly up to about 110°C, which heating damages the film of doubly light-refracting material. Then, the function of quarter-wave retarding is not produced satisfactorily, thereby causing crosstalk between the image sequences which are intended to both eyes separately. In addition, chromatic distortions of transmitted images appear randomly, which cannot be accepted.

Injecting the lens thermoplastic material after having arranged the film of doubly light-refracting material within the injection mould has also been tried. But the film was thus submitted to injection temperatures of about 250°C together with uncontrolled high pressure variations. Important damages to the film of doubly light-refracting material were observed, making it clear that such processes were not adapted to maintain the quality of the doubly light-refracting material.

Starting from this state of the art, an object of the present invention is to improve vision quality for stereoscopic vision based on selection of circular light-polarization. In particular, reducing cross-talk between the respective image perceptions of both eyes of the wearer and reducing chromatic distortions are issues solved by the invention.

Another object of the invention is to provide ophthalmic lenses suitable for stereoscopic vision, which are weight-light and provide improved vision comfort to the wearer.

Still another object of the invention is to provide ophthalmic lenses suitable for stereoscopic vision, which can be inexpensive but of improved optical quality.

To meet these objects and others, the present invention proposes a process for producing an ophthalmic lens suitable for stereoscopic vision based on selection of circular light-polarization in accordance with claim 1.

So the invention combines using an ophthalmic base lens with light filtering based on circular light-polarization. The ophthalmic base lens provides the existing vision quality reached for ophthalmic equipments, and the invention makes this vision quality available for stereoscopic vision. Using a lamination process according to the invention avoids that the film of doubly light-refracting material be exposed to excessive temperatures. The film is therefore not damaged, leading to birefringent behaviour and quarter-wave retarding function which are maintained without being altered. Then, the image sequence separation based on circular-polarization filtering can be achieved efficiently without crosstalk or chromatic distortions.

A first advantage of the invention results from the possibility for the ophthalmic base lens to be one ophthalmic lens already commercialized, without requirements for adapting this lens. Implementing standard ophthalmic lenses in this manner makes it possible to reduce the unit cost of the lenses produced, because of using again manufacturing tools which already exist. Then, performing steps /1/ to /3/ of the invention process for providing additionally stereoscopic vision forms added value.

A second advantage of the invention results from the possibility for the film structure to be provided in the form of large sheets, possibly long rolled sheets, inexpensively. In this way, the unit cost of the produced lenses suitable for stereoscopic vision may be further limited.

In the context of the invention, pseudo-spherical shape for a surface comprises any continuous surface shape which exhibits at least one curvature value at any point in this surface. Generally, a pseudo-spherical surface may exhibit two curvature values at one and same point along two directions perpendicular to each other, and these values may vary continuously when moving in the surface. In particular, a spherical surface is a special case of pseudo-spherical surface, where both values are equal and constant over the whole surface. A toric surface exhibits two curvature values which are different but constant over the whole surface. Progressive and regressive surfaces are also pseudo-spherical surfaces. A complex surface denotes a pseudo-spherical surface which is not spherical or toric.

The ophthalmic lens produced according to the invention may be ametropia-correcting, with the base lens being adapted for correcting at least a part of a wearer's ametropia. Then, the invention combines ametropia correction with circular-polarization selection for providing improved stereoscopic vision quality. The ametropia correction is produced by the ophthalmic base lens, and the film structure participates to producing the circular polarization selection. In such case, the ophthalmic base lens may be selected in accordance with an ophthalmic prescription set for the lens wearer, in order to compensate for his ametropia. In particular, the optical surface of the base lens may be a complex surface, with curvature values which vary continuously between at least two points contained in this optical surface. Progressive eyeglasses suitable for stereoscopic vision can be advantageously produced in this manner.

Alternatively, the base lens may be adapted for producing no ametropia correction at least within a vision area included in the optical surface, or over the whole optical surface. In the latter case, the lens produced according to the invention may be used by a wearer without prior determination of the wearer's ametropia. When the absence of ametropia correction is limited to a reduced vision area, this vision area may be a far vision area, so that only a presbyopia of the wearer can be corrected in a near vision area.

In some implementations of the invention process, step /3/ may be performed by pressing the film structure against the base lens using an inflatable cushion or a resilient stamp which is applied onto the film structure opposite the base lens. In this way, the film structure can be applied without producing defects such as scratches, excessive strains, trapped bubbles, peeling-off, etc. Then, the production yield can be high while ensuring good quality for the lens produced. In particular, the quality obtained is compatible with the ophthalmic standards.

Preferably, the application of the film structure may start at a center point of the lens, and be continued continuously over the whole lens surface. To this end, step /3/ may comprise the following substeps:
/3-1/ arranging the film structure above the optical surface of the base lens with a gap therebetween;
/3-2/ reducing the gap between the film structure and the base lens until a point-contact is produced between the film structure and the base lens at a location in the optical surface apart from a peripheral edge of the base lens; and
/3-3/ pressing the film structure and the base lens against each other so that a contact area between the film structure and the optical surface increases with a contact boundary moving progressively and radially outwards, starting from the initial point-contact and until complete contact is obtained over the whole optical surface.

Optionally, the optical surface of the base lens may be convex, and an application surface of the film structure which faces the base lens in substep /3-1/ may also be convex. Then, the application surface is turned to concave shape at the contact boundary during substep /3-3/.

Step /3/ may be performed with a layer of adhesive material being arranged between the film structure and the optical surface of the base lens. Thus, the film structure can be adhered directly and definitively to the base lens.

The process may further comprise a preforming of the film structure, which is performed between steps /2/ and /3/, for modifying its initial shape. Thus, the stresses which may be produced within the film structure during step /3/ can be reduced, leading to further improved quality of the film structure in the lens produced.

The film structure as provided in step /2/ may form a complete circular-polarization filter.

According to the invention, the film structure further includes a linear-polarizing film arranged so that light entering into an eye of a wearer who is equipped with the ophthalmic lens produced, passes through the linear-polarizing film after the layer of doubly light-refracting material. An angle between a polarization axis of the linear-polarizing film and a slow axis of the layer of doubly light-refracting material is 45°±3° or 135°±3° within the film structure as provided initially.

In some implementations, the layer of doubly light-refracting material may be self-supporting between steps /2/ and /3/.

Alternatively, the layer of doubly light-refracting material may be produced on a substrate film using a material deposition process. Then, step /2/ may comprise the following substeps:
/2-1/ providing the substrate film; and
/2-2/ depositing the at least one doubly light-refracting material on the substrate film, using the material deposition process for forming the layer of doubly light-refracting material or materials.

In such case of layer deposition, the film structure as provided in step /2/ includes the substrate film and the deposited layer of at least one doubly light-refracting material.

The layer of at least one doubly light-refracting material may comprise one or several superposed layers of respective doubly light-refracting materials. It is thus possible to compensate for effects due to light-ray angle with respect to the direction perpendicular to the optical surface, or for chromatic dispersion of the quarter-wave retardation function.

The invention also proposes a method for producing a pair of spectacles which is suitable for viewing a stereoscopic display device based on selection of circular light-polarization, this method comprising:
- producing two ophthalmic lenses dedicated respectively to left and right eyes of the wearer, by implementing a process as described before for each ophthalmic lens; and
- assembling the two ophthalmic lenses with a spectacle frame.

According to a first possibility, the layer of at least one doubly light-refracting material may be oriented in each ophthalmic lens assembled in the frame so that each of them selects a different one of the two opposed circular light-polarizations. Then the pair of spectacles provides stereoscopic vision to the wearer when viewing at the display device.

According to a second possibility, the layer of at least one doubly light-refracting material may be oriented in each ophthalmic lens assembled in the frame so that each of them selects a same one of the two opposed circular light-polarizations. Then, the pair of spectacles provides a clear non-stereoscopic vision to the wearer when viewing the display device, although this latter is operating in stereoscopic mode. Indeed, both lenses are selecting the images of one and same sequence.

Other features and advantages of the present invention will appear from the non-limiting implementations now described, in connection with the following figures:
- Figures 1a and 1b are respectively exploded cross-sectional view and perspective view of main components of an ophthalmic lens produced according to the invention;
- Figure 2 is a cross-sectional view of a film structure;
- Figures 3a to 3d illustrate a first lamination process which may be used in processes according to the invention;
- Figures 4a to 4c illustrate a second lamination process which may be used in processes according to the invention;
- Figure 5 shows a first pair of spectacles which may be produced according to the invention, suitable for stereoscopic vision; and
- Figure 6 shows a second pair of spectacles which may be produced according to the invention, suitable for viewing a stereoscopic display device but without providing the stereoscopic vision.

For clarity sake, elements represented in these figures are not sized in relation with actual dimensions of these elements, and not in relation with any dimension ratio either. In addition, same reference signs which are used in different figures denote identical elements or elements with identical function.

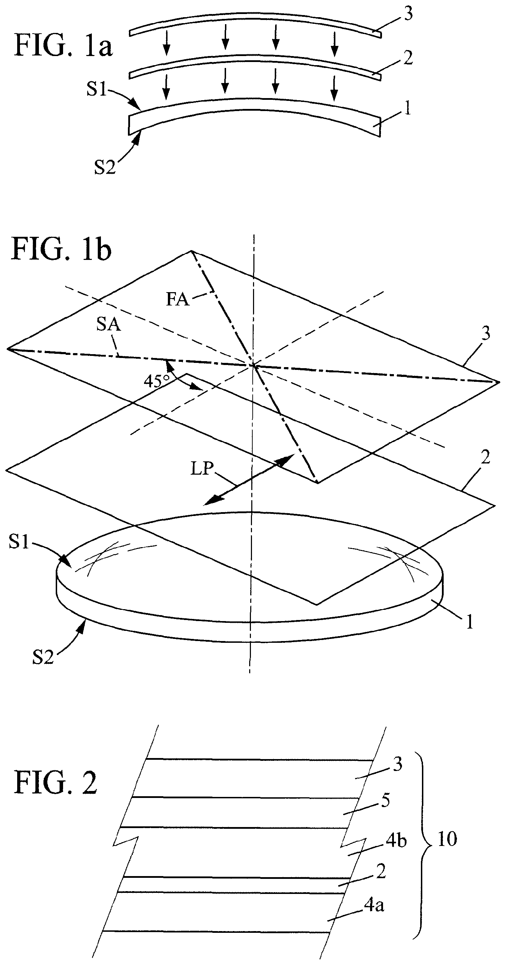

Referring to Figures 1a and 1b, reference numbers 1, 2 and 3 denote respectively an ophthalmic base lens, a linear-polarizing film and a quarter-wave retarding layer. The ophthalmic base lens 1 may be an eyeglass or an eyeglass blank as currently used. S1 denotes its convex front surface, and S2 denotes its concave back surface. Commonly, the front surface S1 is formed directly with its final pseudo-spherical shape during the injection or casting process implemented for producing the base lens 1. The back surface S2 is machined after having collected prescription data for correcting an ametropia of a wearer of the lens. Then, the function of correcting the wearer's ametropia can be supplied by the ophthalmic base lens 1 only, and an issue of adding further functions to the lens is to avoid reducing the quality and the efficiency of the ametropia correction.

Theoretically, adding a circular-polarization filtering function to the base lens 1 consists in adding the linear-polarizing film 2 and the quarter-wave retarding layer 3 so that light rays impinging on the front surface S1 pass through the layer 3 before the film 2. Figures 1a and 1b illustrate a possible ophthalmic lens structure suitable for stereoscopic vision where the linear-polarizing film 2 is first lain on the front surface S1 of the base lens 1, and then the quarter-wave retarding layer 3 is lain over the linear-polarizing film 2. But other structures are possible alternatively. For example, the case of a base lens 1 obtained by casting and incorporating the linear polarizing film 2 can be considered. Such a lens is classically produced by casting a thermoset polymer into a mold in which a linear polarizing film has been positioned parallel and close to the front optical surface S1. Then, the linear polarizing film 2 is embedded in between two bulk thermoset parts. In that case the quarter-wave retarding layer 3 is directly lain over the front surface S1. Alternatively for example, the quarter-wave retarding layer 3 may be located again on the front surface S1, but the linear-polarizing film 2 is located on the back surface S2. Such a structure is adequate if the birefringent properties of the base lens material have no significant effect and can be neglected. In another possible structure, the linear-polarizing film 2 and the quarter-wave retarding layer 3 are both located on the back surface S2, with the layer 3 between the film 2 and the base lens 1. But the structure of Figures 1a and 1b may be preferred because applying films on a concave surface can be easier, and this structure is used hereafter for illustrative purpose.

The linear-polarizing film 2 may be PVA (polyvinyl alcohol)-based, with iodine (I₂) molecules incorporated therein. Alternatively the linear-polarizing film 2 may be PVA (polyvinyl alcohol)-based, with dichroic dyes molecules incorporated therein. The film is stretched uniaxially for orienting the iodine molecules, thereby producing the linear-polarizing function. Thus, the linear-polarization axis of the film 2 is parallel to this film, and is denoted LP in the Figures. In this whole specification, the linear-polarization axis is that of the electric field of linear-polarized light which is transmitted through the film without significant absorption, or with minimum absorption. Possible thickness for the film 2 is comprised between 25 and 50 µm (micrometer). In addition, such PVA-based film may be covered by at least one protecting film or preferentially may be sandwiched between two protecting films, for example two TAC (cellulose triacetate) or CAB (cellulose acetate butyrate) -based films, or two polycarbonate-based films, or a combination of two of those different materials. The thicknesses of the protecting films may be comprised between 50 and 200 µm preferably. Such layered structures are commercially available, so that further description is not necessary.

The quarter-wave retarding layer 3 is based on at least one doubly light-refracting material - or birefringent material -, with a suitable thickness so as to produce the quarter-wave retarding function for a wavelength in the visible range. For example, the layer 3 may be PC (polycarbonate) -based, with thickness comprised between 10 and 200 µm, preferably between 50 and 100 µm. Other possible materials for the layer 3 are based on cyclo-olefins polymers or coplymers, or norbornene, or polyamide, or PMMA (polymethylmethacrylate), or PET (polyethyleneterephtalate), or PEN (polyethylenenaphtalate) or TAC (cellulose triacetate), or CAB (cellulose acetate butyrate), or PVA (polyvinyl alcohol). For producing the quarter-wave retarding function, the doubly light refracting material must be oriented so that the slow axis SA and the fast axis FA are both parallel to the layer 3.

In addition, the linear-polarizing film 2 and the quarter-wave retarding layer 3 are oriented with respect to each other so that an angle between the slow axis SA of the quarter-wave retarding layer 3 and the linear-polarization axis LP of the linear-polarizing film 2 is about 45° or 135°. Deviations up to +/-3° with respect to these target angle values may be accepted.

In first possible implementations of the invention, the linear-polarizing film 2 may be first applied onto the front surface S1 of the ophthalmic base lens 1, without the quarter-wave retarding layer 3. Processes for applying the film 2 on the pseudo-spherical front surface S1 are already known, and not repeated here. Then applying the quarter-wave retarding layer 3 over the linear-polarizing film 2 is part of the present invention, but the reader will deduce possible processes for such separate application of the layer 3 from the description below of second implementations.

In a second implementation which is not part of the invention, the linear-polarizing film 2 and the quarter-wave retarding layer 3 are both incorporated in a film structure 10 as represented in Figure 2. This film structure is supplied as a whole initially, and is intended to be applied on the front surface S1 of the ophthalmic base lens 1. This film structure is comprised of, from bottom upwards in Figure 2: a first protecting film 4a, the linear-polarizing film 2, a second protecting film 4b, an intermediate adhesive layer 5, and the quarter-wave retarding layer 3. Materials and thickness values already mentioned for the films and layer may still be used within the film structure 10. The intermediate adhesive layer 5 may be PBA (polybutyl acrylate) -based, with thickness of between 25 and 50 µm. A detailed film structure 10 which has been used is given for illustrative purpose:
cellulose triacetate-based first protecting layer 4a with thickness of 80 µm,
polyvinyl alcohol-based linear-polarizing film 2 with thickness of 31 µm,
cellulose triacetate-based second protecting layer 4b with thickness of 80 µm,
polybutyl acrylate-based intermediate adhesive layer 5 with thickness of 34 µm,
polycarbonate-based quarter-wave retarding layer 3 with thickness of 65 µm.

When being applied on the front surface S1 of the ophthalmic base lens 1, the film structure 10 is oriented so that the quarter-wave retarding layer 3 is facing away from the base lens 1.

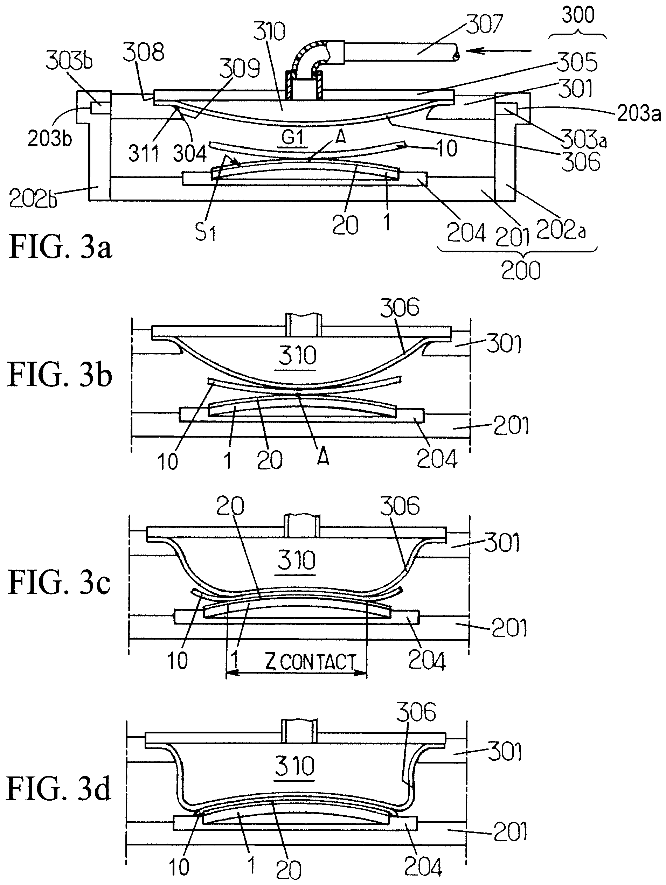

A first example process for laminating the film structure 10 onto the base lens 1 is now described in connexion with Figures 3a to 3d. This lamination process is described in document WO 2007/133208 in particular.

The film structure 10 may be first thermoformed so that it becomes curved, for example with roughly spherical shape. Such thermoforming may be performed using a well-known process, such as that described in United States patent application published under number US 2005/0121835. When the film structure 10 is cooled again after thermoforming, it has a permanent curved shape with a concave surface and a convex surface. This curved shape may be then inverted. Such inversion may be performed manually or by using an inflated membrane for example, by pressing on the convex surface of the film structure 10 in a middle part of it. After such thermoforming step, the film structure 10 is convex on its side opposed to the quarter-wave retarding layer 3.

Figure 3a shows a device that may be used for laminating the film structure 10 onto the base lens 1. This device comprises a lower part 200 and an upper part 300. The lower part 200 comprises a main body 201 which is equipped with two lateral flanges 202a and 202b. The flanges 202a and 202b are provided with grooves 203a and 203b respectively. The upper part 300 comprises a main body 301 which is equipped with lateral rails 303a and 303b, in order to allow the parts 200 and 300 to be simply joined together by the rails 303a and 303b moving within and along the grooves 203a and 203b, which form slideways. When joined together, parts 200 and 300 form a gap G1 of predetermined height.

The lower part 200 also comprises a lens holder 204 which is located in a middle part of the main body 201, between the flanges 202a and 202b. The holder 204 may be integral with the main body 201.

The main body 301 of the upper part 300 is provided with an opening 304 which is larger than the size of the ophthalmic base lens 1. A closure part 305 is fitted in the main body 301 from upwards for closing the opening 304. A resilient membrane 306 is pinched between the main body 301 and the closure part 305 around the opening 304. The closure part 305 is held tight-clamped against the main body 301, while pinching the membrane 306 in a sealed manner. The membrane 306 and the closure part 305 thus form a sealed cavity 310. The closure part 305 is provided with gas inlet means 307, for introducing a pressurized gas into the cavity 310. These inlet means 307 comprise an external duct part for connection to a pressurized gas source (not shown). The main body 301 has a straight bore 308 around the opening 304, suitable for keeping the closure part 305 in a centered position with respect to the opening 304. It also includes a conical surface portion 309 for guiding a deformation of the membrane 306 through the opening 304. A curved connecting surface 311 also connects the straight bore 308 to the conical surface portion 309.

Figures 3a-3d are cross-sectional views showing parts 200 and 300 in the assembly position. Then, the holder 204 is in a centered position under the opening 304, with the gap G1 of fixed height between them. Use of this first lamination device is now detailed, in reference to these figures.

When parts 200 and 300 are separated, the ophthalmic base lens 1 is placed on the holder 204 with its front surface S1 facing upwards. A layer 20 of adhesive material may have been previously deposited on the front surface S1. Thickness of layer 20 may be about 25 µm and the adhesive material is preferably of pressure-sensitive type (PSA for Pressure-Sensitive Adhesive). Any other type of adhesive material may be used alternatively, which makes it possible to retain the film structure 10 on the lens surface S1. For example it is possible to use thermal adhesive, UV-curable adhesive, hot-melt adhesive, or latex adhesive. Alternatively, the adhesive material layer 20 may be deposited on the surface of the film structure 10 which faces the front surface S1 of the base lens 1. This surface of the film structure 10 has been called application surface in the general part of the specification. In some cases, depending of the adhesive material used, respective layers of adhesive material may be deposited on both surfaces of the film structure 10 and the base lens 1. Layer 20 may be deposited on the base lens 1 or/and film structure 10 using any process known in the art, such as spin-coating for example.

Using a pressure-sensitive adhesive (PSA) is particularly advantageous since the film structure 10 is permanently retained on the base lens 1 in a simple and inexpensive manner, without impairing the optical properties of both the base lens and the film structure. In particular, no irradiation, such as ultraviolet irradiation, nor intensive heating is required for obtaining a permanent bonding with a pressure-sensitive adhesive. All pressure-sensitive adhesives exhibit permanent tack and have a low elastic modulus at room temperature, typically between 10³ and 10⁷ Pa (pascals). It is pointed out that the adhesion mechanism involved with pressure sensitive adhesives does not involve chemical bonding, but it is based on special viscoelastic properties of pressure-sensitive adhesives. These properties intrinsic to each pressure-sensitive adhesive composition make it possible to create electrostatic Van-der-Waals interactions at the bonding interface. This occurs when a pressure-sensitive adhesive is brought into contact with a solid material with pressure. The pressure and the low modulus of the pressure-sensitive adhesive create very close contact of this latter at a molecular scale with the topology of the solid material. Moreover, bulk viscoelastic properties of the pressure-sensitive adhesive lead to dissipation, within the thickness of the adhesive layer, of the energy resulting from mechanical stressing of the bonding interface. Therefore the interface can withstand pull-strengths and debonding mechanisms.

In addition, pressure-sensitive adhesives can be deposited in the form of a thin layer with uniform thickness. Such thickness may be comprised between 0.5 and 300 µm. Then, image formation through the lens is not impaired by the layer of pressure-sensitive adhesive and the optical power of the lens is not altered either. In particular, the assembly of the lens with the film structure is compatible with the precision that is required when the lens is of progressive addition type.

Several pressure-sensitive adhesives may be used in a process according to the invention. Advantageously, the pressure-sensitive adhesive is selected from a compound based on a polyacrylate, a styrene-based block copolymer and a blend incorporating a natural rubber. Non-limiting examples of pressure-sensitive adhesives have general compositions based on polyacrylates, in particular polymethacrylates, or based on ethylene copolymers, such as ethylene vinylacetate, ethylene-ethylacrylate and ethylene-ethylmethacrylate copolymers, or on synthetic rubber and elastomers, including silicones, polyurethane, styrene-butadienes, polybutadiene, polyisoprene, polypropylene, polyisobutylene, or based on polymers containing nitriles or acrylonitriles, or on polychloroprene, or on block-copolymers that include polystyrene, polyethylene, polypropylene, polyisoprene, polybutadiene, on polyvinylpyrrolidone or vinylpyrrolidone copolymers, or are blends (with continuous or discontinuous phases) of the above polymers, and also may comprise block-copolymers obtained from the above-listed compounds. These pressure-sensitive adhesives may also include one or more additives selected from tackifiers, plasticizers, binders, antioxidants, stabilizers, pigments, dyes, dispersing agents and diffusion agents. For implementing the invention, using a pressure-sensitive adhesive which is polyacrylate-based is particularly preferred.

It is also possible to choose the pressure sensitive adhesive so that it provides temporary bonding. Such feature may be useful to obtain a corrective lens with the ability to filter a circular-polarized light for stereoscopic viewing in a reversible manner. An example of such pressure sensitive adapted to temporary bonding is the product commercialized by Nitto Denko under reference CS9621-T.

Other arrangements for the adhesive material layer 20 are possible alternatively. For example, it is possible to use a multilayer structure such as a layer of hotmelt adhesive (HMA) deposited onto at least one layer of latex adhesive, or preferentially a layer of hotmelt adhesive sandwiched between two layers of latex adhesives. Such adhesive materials are described in particular in the patent applications WO 2011/053329 and WO 2010/053862.

The film structure 10 is placed on top of the base lens 1, with the quarter-wave retarding layer 3 facing away from the front surface S1 of the base lens 1. Respective surfaces of the film structure 10 and the base lens 1 which are facing each other are both convex at this moment, with a contact therebetween limited within a very little area, which is virtually reduced to a single point, noted A on Figure 3a. The film structure 10 may be also progressively approached to the front surface S1 of the base lens 1. This embodiment presents the advantage to control the contact point between the film structure 10 and the base lens 1.

Then the upper part 300 is joined with the lower part 200 via the rails 303a and 303b sliding into the grooves 203a and 203b, without moving the base lens 1 and the film structure 10. The membrane 306 is then progressively inflated so that it comes into contact with the concave surface of the film structure 10 above point A (Figure 3b). As gas pressure within the cavity 310 is further increased, the membrane 306 pushes the film structure 10 against the front surface S1 of the base lens 1 with a contact area which is gradually increasing. This contact area is noted Z_{CONTACT} on Figure 3c. Within the area Z_{CONTACT}, the film structure 10 conforms to the shape of the convex front surface S1, so that the application surface of the film structure 10 which is in contact with the base lens 1 becomes itself concave within the area Z_{CONTACT}. Out of the area Z_{CONTACT}, the membrane 306 is not yet in contact with the film structure 10, so that the application surface of the film structure 10 is still convex out of the area Z_{CONTACT}. So the application surface of the film structure 10 locally turns from convex shape to concave shape at the border of the area Z_{CONTACT}, at the same time this border moves towards the peripheral edge of the base lens 1. Finally, for enough gas pressure in cavity 310, the film structure 10 is applied on the base lens 1 over its whole optical surface S1 (Figure 3d). Lower surface of the film structure 10 is then concave again over its entire area, and the film structure 10 therefore exhibits a curved shape which conforms entirely to the front surface S1 of the base lens 1.

Gas pressure is then released in cavity 310, part 300 is disassembled from part 200 and the base lens 1 assembled with the film structure 10 is recovered.

Preferably, the film structure 10 may have been heated before being placed on top of the base lens 1 (Figure 3a), so that it is softer when progressively pressed between the membrane 306 and the base lens 1 (figures 3b-3d). The temperature of the film structure 10 is preferably higher than 75°C. This temperature may be selected depending on the materials of the film structure 10, for example in relation with their glass temperature Tg, so that the film structure 10 can accommodate temporary stresses without forming defects.

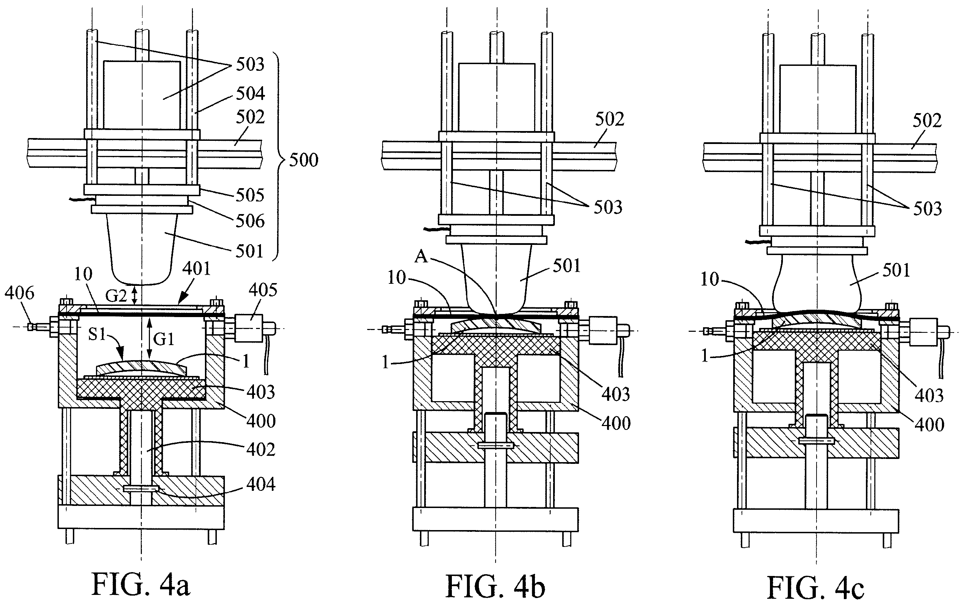

A second example process for laminating the film structure 10 onto the base lens 1 is now described in connexion with Figures 4a to 4c. This second lamination process is derived from that described in document WO 2006/105999 in particular.

The lamination device now used comprises an enclosure 400 and pressing means 500.

The enclosure 400 is provided with an opening 401 at its top end, and adapted for this opening to be fitted with the film structure 10 so as to hermetically seal the enclosure 400. A piston 402 is arranged below the enclosure 400 so as to drive a vertical movement of a holder 403 within the enclosure. The bottom end of the enclosure 400 is provided with appropriate means (not shown) for ensuring gas-tight connection between the holder 403 and the bottom of the enclosure 400. Locking means, for example a clamp 404, allow locking of the holder 403 at a selected position along the vertical direction. The enclosure 400 is further provided with a gas inlet 405 and a gas outlet 406. The gas outlet 406 is connected to a pumping device (not shown) for producing a vacuum within the enclosure 400, and the gas inlet 405 is controlled for recovering ambient pressure within the enclosure 400. Controlling the gas pressure which exists within the enclosure 400 allows vertical driving of the holder 403.

The pressing means 500 comprise a resilient stamp 501 which is mounted onto a stationary support 502 above the enclosure 400. The stamp 501 is located above a center part of the opening 401. Sliding shafts 503 are connecting a base portion 505 of the stamp 501 to the support 502 so as to allow vertical movement of the stamp 501. Suitable means such as a stepper 504 are used to control the vertical position of the stamp 501. Pressure detector 506 may be arranged between the resilient portion of the stamp 501 and its base portion 505 for measuring the application force of the stamp 501 against the film structure 10 when the stamp is moved downwards further after it has contacted the film structure 10.

Figure 4a illustrates the starting configuration of this second lamination device. The film structure 10 is arranged firmly across the opening 401, while being oriented so that the quarter-wave retarding layer 3 appears above the linear-polarizing film 2. The ophthalmic base lens 1 is fixed on the holder 403 with its front surface S1 facing upwards. The front surface S1 may be covered again with an adhesive layer 20 (not shown) in a similar manner as described earlier. The film structure 10 may have been heated initially so as to soften it. The holder 403 is in lower position so that a first gap G1 separates the front surface S1 of the base lens 1 from the film structure 10. The stamp 501 is in upper position, so that a second gap G2 separates the useful end of the stamp 501 from the film structure 10 on a film structure side opposed to that of the first gap G1.

From this starting configuration, a preforming step may be implemented optionally for preforming the film structure 10. This preforming is achieved by crushing a first time the stamp 501 on the film structure 10 while the holder 403 is maintained in lower position. The film structure 10 is thus provided with a curved shape bulging through the opening 401, towards the inside of the enclosure 400. The stamp 501 is moved back upwards so that non-zero gap G2 is restored.

Lamination of the film structure 10 comprises itself two steps. First as shown on figure 1b, the holder 403 is raised so that the first gap G1 becomes zero, producing the initial contact point A between the film structure 10 and the front surface S1 of the base lens 1. The holder 403 is then locked firmly in this position. The stamp 501 is also moved down to the film structure 10. The second lamination step shown on Figure 4c consists in forcing the stamp 501 further downwards, so that it is progressively crushed against the film structure 10. In this manner, the film structure 10 progressively conforms to the shape of the front surface S1 of the base lens 1, within a contact area which increases radially and continuously.

The stamp 501 is finally raised again, and the film structure 10 can be released from the enclosure 400 with the base lens 1 adhered to the film structure 10.

Other lamination processes may also be used alternatively.

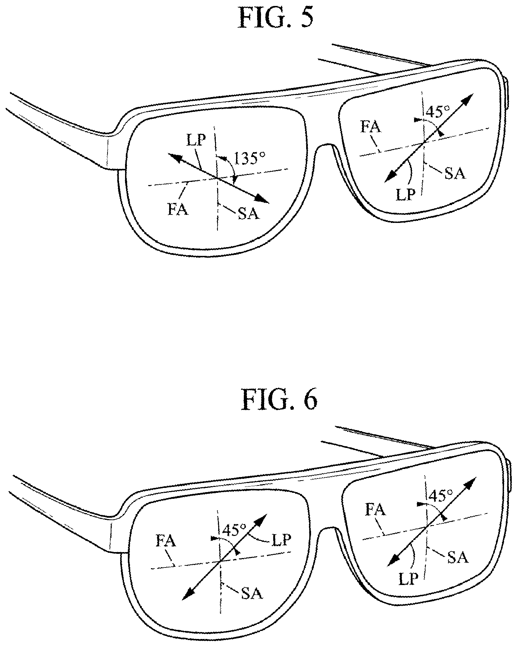

Figure 5 shows a complete pair of spectacles comprising left and right ophthalmic lenses produced as described earlier in this specification, and assembled within a spectacle frame. The left lens has been produced with a 45° value for the angle between the slow axis SA of the quarter-wave retarding layer 3 and the linear polarization axis LP of the linear-polarizing film 2, whereas the right lens has been produced with a 135° value for the same angle. Thus, each one of the lenses is capable of transmitting light with initial circular polarization opposed to that of the other lens. Therefore, the pair of spectacles is suitable for TV watching with stereoscopic vision with image selection based on circular light-polarization. As used herein, TV means any image display device comprising a display panel, including television devices, computer devices, videogame devices, phone devices, motion picture devices, etc, these devices being stationary or mobile. This definition also encompasses the use of projection screen as used in movie theaters.

Figure 6 corresponds to Figure 5, but with both right and left lenses having a same value for the angle between the slow axis SA of the quarter-wave retarding layer 3 and the linear polarization axis LP of the linear-polarizing film 2. This value is 45° for example, but it could be 135° as well. Then, the pair of spectacles of Figure 6 allows clear watching of the same TV devices as listed above suitable for allowing stereoscopic vision with image selection based on circular light-polarization, but without stereoscopic perception for the wearer of the spectacles. Indeed, both lenses now transmit light with one and same circular polarization, thereby inhibiting perception of separated images which produce stereoscopic vision.

It is noted that the global angular orientation of the film structure 10 parallel to the optical surfaces of the left and right lenses is not important to deliver the ability to filter incoming circularly polarized light. Therefore, both the quarter-wave retarding layer 3 and the linear-polarizing film 2 can be rotated all together parallel to the optical surfaces without the polarization selection being changed in both cases of Figures 5 and 6. Condition for that is that the angles between the slow axis SA and the linear polarization axis LP are maintained. In practice, it may be preferred to choose the same angular orientation of the film structure 10 parallel to the optical surfaces for both eyes, for the particular sake of avoiding any perceptible chromatic difference between the two eyes that could be related to the wavelength dependent properties of the quarter-wave retarding layer. Therefore the linear-polarization axis of the linear-polarizing film may be used as reference on both eyes and positioned horizontally or vertically in the frame.

It is obvious that the detailed implementations of the invention which have been described may be adapted in various manners while maintaining some of the advantages cited. In particular, the quarter-wave retarding layer may be manufactured using alternative processes leading to layer structures different from that of a single layer.

First, the quarter-wave retarding layer may be comprised of several layer units which all together produce again the quarter-wave retarding function, but each have a respective material different from that of the other layer unit(s). Such composite structures for the quarter-wave retarding layer are already known to the Man skilled in the art, and allow reducing the chromatic dispersion of the quarter-wave retarding function, as well as the variations of this function with the angle between the light rays and the direction perpendicular to the optical surface of each ophthalmic lens. In this way, cross-talk is avoided between both image sequences which are intended respectively to both eyes of the wearer.

Second, the quarter-wave retarding layer may be produced using a material deposition process. Such processes are also well-known, and some of them include depositing first an aligning layer, and then the quarter-wave retarding layer itself. The aligning layer may be oriented using irradiation with linear-polarized light. The quarter-wave retarding layer is based on a liquid crystal composition which orients itself in accordance with the orientation of the aligning layer. Finally, the quarter-wave retarding layer is cured for fixing permanently its orientation, thereby making its birefringent behaviour permanent. Quarter-wave retarding layer produced in this way be also have a composite structure as indicated just before.

## Claims

1. Process for producing an ophthalmic lens suitable for stereoscopic vision based on selection of circular light-polarization, said process comprising the following steps:
/1/ providing an ophthalmic base lens (1) having an optical surface (S1) of pseudo-spherical shape;
/2/ providing a film structure (10), which film structure includes a layer (3) of at least one doubly light-refracting material suitable for said layer to produce a quarter-wave retarding function for at least one wavelength of visible light; and
/3/ laminating the film structure (10) onto the optical surface (S1) of the base lens (1), so that the film structure conforms to the pseudo-spherical shape;
wherein the base lens (1) is provided in step /1/ with a linear-polarizing film (2) arranged so that light entering into a wearer's eye equipped with the ophthalmic lens produced passes through the linear-polarizing film after the layer of at least one doubly light-refracting material (3),
and step /3/ is performed so that an angle between a polarization axis (LP) of the linear-polarizing film and a slow axis (SA) of the layer of at least one doubly light-refracting material is 45°±3° or 135°±3° in the ophthalmic lens produced.

2. Process according to Claim 1, wherein step /3/ is performed by pressing the film structure (10) against the base lens (1) using an inflatable cushion (306) or a resilient stamp (501) applied onto the film structure opposite the base lens.

3. Process according to Claim 1 or 2, wherein step /3/ comprises the following substeps:
/3-1/ arranging the film structure (10) above the optical surface (S1) of the base lens (1) with a gap (G1) therebetween;
/3-2/ reducing the gap (G1) between the film structure (10) and the base lens (1) until a point-contact (A) is produced between said film structure and said base lens at a location in the optical surface (S1) apart from a peripheral edge of the base lens; and
/3-3/ pressing the film structure (10) and the base lens (1) against each other so that a contact area (Z_{CONTACT}) between said film structure and the optical surface increases with a contact boundary moving progressively and radially outwards, starting from the initial point-contact (A) and until complete contact is obtained over the whole optical surface (S1).

4. Process according to Claim 3, wherein the optical surface (S1) of the base lens (1) is convex, and an application surface of the film structure (10) which faces the base lens in substep /3-1/ is also convex, and wherein said application surface is turned to concave shape at the contact boundary during substep /3-3/.

5. Process according to any one of the preceding claims, wherein step /3/ is performed with a layer (20) of adhesive material being arranged between the film structure (10) and the optical surface (S1) of the base lens (1).

6. Process according to any one of the preceding claims, further comprising a preforming of the film structure (10) performed between steps /2/ and /3/, for modifying an initial shape of said film structure.

7. Process according to any one of the preceding claims 1 to 6, wherein the layer of at least one doubly light-refracting material (3) is self-supporting between steps /2/ and /3/.

8. Process according to any one of claims 1 to 6, wherein step /2/ comprises the following substeps:
/2-1/ providing a substrate film; and
/2-2/ depositing the at least one doubly light-refracting material on the substrate film, using a material deposition process for forming the layer of at least one doubly light-refracting material (3),
the film structure (10) as provided in step /2/ including the substrate film and the deposited layer of at least one doubly light-refracting material.

9. Process according to any one of the preceding claims, wherein the layer of at least one doubly light-refracting material (3) comprises several superposed layers of respective doubly light-refracting materials.

10. Process according to any one of claims 1 to 9, wherein the ophthalmic lens produced is ametropia-correcting, with the base lens (1) being adapted for correcting at least a part of a wearer's ametropia.

11. Process according to claim 10, wherein the optical surface (S1) of the base lens (1) is a complex surface, with curvature values varying continuously between at least two points contained in said optical surface.

12. Process according to any one of claims 1 to 9, wherein the base lens (1) is adapted for producing no ametropia correction at least within a vision area included in the optical surface (S1).

13. Process according to claim 12, wherein the base lens (1) is adapted for producing no ametropia correction over the whole optical surface (S1).

14. Method for producing a pair of spectacles suitable for viewing a stereoscopic display device based on selection of circular light-polarization, said method comprising:
- producing two ophthalmic lenses dedicated respectively to left and right eyes of a wearer, by implementing a process according to any one of the preceding claims for each ophthalmic lens; and
- assembling the two ophthalmic lenses with a spectacle frame.

15. Method according to claim 14, wherein the layer of at least one doubly light-refracting material (3) is oriented in each ophthalmic lens assembled in the spectacle frame so that each one of said ophthalmic lenses selects a different one of two opposed circular light-polarizations.

16. Method according to claim 14, wherein the layer of at least one doubly light-refracting material (3) is oriented in each ophthalmic lens assembled in the frame so that each one of said ophthalmic lenses selects a same one of two opposed circular light-polarizations.

## Patentansprüche

1. Prozess zur Herstellung eines Brillenglases, das auf der Grundlage einer Auswahl zirkularer Lichtpolarisation für räumliches Sehen geeignet ist, wobei der Prozess folgende Schritte umfasst:
1) Bereitstellen eines Brillengrundglases (1) mit einer optischen Oberfläche (S1) von pseudosphärischer Form,
2) Bereitstellen einer Folienkonstruktion (10), die eine Schicht (3) aus mindestens einem doppelbrechenden Material aufweist, das sich dafür eignet, dass die Schicht eine Lambda-Viertel-Verzögerungsfunktion für mindestens eine Wellenlänge sichtbaren Lichts ergibt, und
3) Auflaminieren der Folienkonstruktion (10) auf die optische Oberfläche (S1) des Grundglases (1), so dass die Folienkonstruktion die pseudosphärische Form annimmt,
wobei das Grundglas (1) in Schritt 1) mit einer linear polarisierenden Folie (2) versehen wird, die so angeordnet ist, dass Licht, welches in das Auge eines mit dem hergestellten Brillenglas ausgestatteten Trägers einfällt, nach der Schicht aus mindestens einem doppelbrechenden Material (3) durch die linear polarisierende Folie fällt,
und Schritt 3) so durchgeführt wird, dass ein Winkel zwischen einer Polarisationsachse (LP) der linear polarisierenden Folie und einer langsamen Achse (SA) der Schicht aus dem mindestens einen doppelbrechenden Material bei dem hergestellten Brillenglas 45°±3° oder 135°±3° beträgt.

2. Prozess nach Anspruch 1, wobei Schritt 3) durch Anpressen der Folienkonstruktion (10) an das Grundglas (1) mithilfe eines aufblasbaren Kissens (306) oder eines elastischen Stempels (501) durchgeführt wird, das/der auf der dem Grundglas gegenüberliegenden Seite der Folienkonstruktion angelegt wird.

3. Prozess nach Anspruch 1 oder 2, wobei Schritt 3) die folgenden Teilschritte umfasst:
3.1) Anordnen der Folienkonstruktion (10) über der optischen Oberfläche (S1) des Grundglases (1) mit einem Abstand (G1) dazwischen,
3.2) Verringern des Abstands (G1) zwischen der Folienkonstruktion (10) und dem Grundglas (1), bis sich an einer von einem Umfangsrand des Grundglases entfernten Stelle der optischen Oberfläche (S1) ein Punktkontakt (A) zwischen der Folienkonstruktion und dem Grundglas ergibt, und
3.3) Anpressen der Folienkonstruktion (10) und des Grundglases (1) aneinander, so dass sich ein Kontaktbereich (Z_{CONTACT}) zwischen der Folienkonstruktion und der optischen Oberfläche vergrößert, wobei sich eine Kontaktgrenze vom ursprünglichen Kontaktpunkt (A) ausgehend allmählich radial nach außen bewegt, bis auf der gesamten optischen Oberfläche (S1) ein vollständiger Kontakt erreicht ist.

4. Prozess nach Anspruch 3, wobei die optische Oberfläche (S1) des Grundglases (1) konvex ist und eine Anbringfläche der Folienkonstruktion (10), die dem Grundglas in Teilschritt 3.1) zugewandt ist, ebenfalls konvex ist und wobei die Anbringfläche bei Teilschritt 3.3) an der Kontaktgrenze in eine konkave Form gebracht wird.

5. Prozess nach einem der vorhergehenden Ansprüche, wobei beim Durchführen von Schritt 3) eine Schicht (20) aus Haftmaterial zwischen der Folienkonstruktion (10) und der optischen Oberfläche (S1) des Grundglases (1) angeordnet ist.

6. Prozess nach einem der vorhergehenden Ansprüche, das ferner ein Vorformen der Folienkonstruktion (10) zum Modifizieren einer Ausgangsform der Folienkonstruktion umfasst, das zwischen Schritt 2) und 3) durchgeführt wird.

7. Prozess nach einem der vorhergehenden Ansprüche 1 bis 6, wobei die Schicht aus mindestens einem doppelbrechenden Material (3) zwischen Schritt 2) und 3) selbsttragend ist.

8. Prozess nach einem der Ansprüche 1 oder 6, wobei Schritt 2) die folgenden Teilschritte umfasst:
2.1) Bereitstellen einer Substratfolie und
2.2) Aufbringen des mindestens einen doppelbrechenden Materials auf die Substratfolie mithilfe eines Materialaufbringverfahrens zum Ausbilden der Schicht aus mindestens einem doppelbrechenden Material (3),
wobei die in Schritt 2) bereitgestellte Folienkonstruktion (10) die Substratfolie und die aufgebrachte Schicht aus mindestens einem doppelbrechenden Material aufweist.

9. Prozess nach einem der vorhergehenden Ansprüche, wobei die Schicht aus mindestens einem doppelbrechenden Material (3) mehrere übereinanderliegende Schichten aus jeweils doppelbrechendem Material umfasst.

10. Prozess nach einem der Ansprüche 1 bis 9, wobei das hergestellte Brillenglas eine Ametropie korrigiert, wobei das Grundglas (1) für das Korrigieren von zumindest einem Teil der Ametropie eines Trägers ausgelegt ist.

11. Prozess nach Anspruch 10, wobei es sich bei der optischen Oberfläche (S1) des Grundglases (1) um eine komplexe Oberfläche mit Krümmungswerten handelt, die zwischen mindestens zwei Punkten auf der optischen Oberfläche kontinuierlich variieren.

12. Prozess nach einem der Ansprüche 1 bis 9, wobei das Grundglas (1) so ausgelegt ist, dass sich zumindest in einem zu der optischen Oberfläche (S1) gehörenden Sehbereich keine Ametropiekorrektur ergibt.

13. Prozess nach Anspruch 12, wobei das Grundglas (1) so ausgelegt ist, dass sich über die gesamte optische Oberfläche (S1) hinweg keine Ametropiekorrektur ergibt.

14. Verfahren zum Herstellen einer Brille, die auf der Grundlage einer Auswahl zirkularer Lichtpolarisation zum Betrachten einer stereoskopischen Anzeigevorrichtung geeignet ist, wobei das Verfahren Folgendes umfasst:
- Herstellen von zwei Brillengläsern für das linke beziehungsweise das rechte Auge eines Trägers durch Umsetzen eines Prozesses nach einem der vorhergehenden Ansprüche für jedes Brillenglas und
- Zusammenbauen der beiden Brillengläser mit einem Brillenrahmen.

15. Verfahren nach Anspruch 14, wobei die Schicht aus mindestens einem doppelbrechenden Material (3) bei jedem in den Brillenrahmen eingebauten Brillenglas so ausgerichtet ist, dass jedes der Brillengläser eine andere von zwei entgegengesetzten zirkularen Lichtpolarisationen auswählt.

16. Verfahren nach Anspruch 14, wobei die Schicht aus mindestens einem doppelbrechenden Material (3) bei jedem in den Brillenrahmen eingebauten Brillenglas so ausgerichtet ist, dass jedes der Brillengläser die gleiche von zwei entgegengesetzten zirkularen Lichtpolarisationen auswählt.

## Revendications

1. Procédé de production d'un verre ophtalmique approprié pour une vision stéréoscopique basée sur la sélection d'une polarisation circulaire de la lumière, ledit procédé comprenant les étapes suivantes :
/1/ se procurer un verre ophtalmique de base (1) ayant une surface optique (S1) de forme pseudo-sphérique ;
/2/ se procurer une structure de film (10), laquelle structure de film comporte une couche (3) d'au moins un matériau à double réfraction de la lumière approprié pour que ladite couche génère une fonction de retard quart d'onde pour au moins une longueur d'onde de lumière visible ; et
/3/ stratifier la structure de film (10) sur la surface optique (S1) du verre de base (1), de telle sorte que la structure de film épouse la forme pseudo-sphérique ;
dans lequel le verre de base (1) est obtenu à l'étape /1/ avec un film de polarisation linéaire (2) disposé de telle sorte que la lumière entrant dans un oeil d'un porteur équipé du verre ophtalmique produit traverse le film de polarisation linéaire après la couche d'au moins un matériau à double réfraction de la lumière (3),
et l'étape /3/ est effectuée de telle sorte qu'un angle entre un axe de polarisation (LP) du film de polarisation linéaire et un axe lent (SA) de la couche d'au moins un matériau à double réfraction de la lumière est de 45°±3° ou 135°±3° dans le verre ophtalmique produit.

2. Procédé selon la revendication 1, dans lequel l'étape /3/ est effectuée par pressage de la structure de film (10) contre le verre de base (1) au moyen d'un coussin gonflable (306) ou d'un poinçon élastique (501) appliqué sur la structure de film à l'opposé du verre de base.

3. Procédé selon la revendication 1 ou 2, dans lequel l'étape /3/ comprend les sous-étapes suivantes :
/3-1/ disposer la structure de film (10) au-dessus de la surface optique (S1) du verre de base (1) avec un interstice (G1) entre eux ;
/3-2/ réduire l'interstice (G1) entre la structure de film (10) et le verre de base (1) jusqu'à ce qu'un contact ponctuel (A) soit généré entre ladite structure de film et ledit verre de base à un emplacement dans la surface optique (S1) à l'écart d'un bord périphérique du verre de base ; et
/3-3/ presser la structure de film (10) et le verre de base (1) l'un contre l'autre de telle sorte qu'une zone de contact (Z_{CONTACT}) entre ladite structure de film et la surface optique augmente avec une limite de contact se déplaçant progressivement et radialement vers l'extérieur, en partant du contact ponctuel initial (A) et jusqu'à ce qu'un contact complet soit obtenu sur la surface optique entière (S1).

4. Procédé selon la revendication 3, dans lequel la surface optique (S1) du verre de base (1) est convexe, et une surface d'application de la structure de film (10) qui fait face au verre de base à la sous-étape /3-1/ est également convexe, et dans lequel ladite surface application est transformée en forme concave à la limite de contact pendant la sous-étape /3-3/.

5. Procédé selon l'une quelconque des revendications précédentes, dans lequel l'étape /3/ est effectuée avec une couche (20) de matériau adhésif qui est disposée entre la structure de film (10) et la surface optique (S1) du verre de base (1).

6. Procédé selon l'une quelconque des revendications précédentes, comprenant en outre un préformage de la structure de film (10) effectué entre les étapes /2/ et /3/, pour modifier une forme initiale de ladite structure de film.

7. Procédé selon l'une quelconque des revendications 1 à 6 précédentes, dans lequel la couche d'au moins un matériau à double réfraction de la lumière (3) est autoportante entre les étapes /2/ et /3/.

8. Procédé selon l'une quelconque des revendications 1 à 6, dans lequel l'étape /2/ comprend les sous-étapes suivantes :
/2-1/ se procurer un film substrat ; et
/2-2/ déposer l'au moins un matériau à double réfraction de la lumière sur le film substrat en utilisant un procédé de dépôt de matière pour former la couche d'au moins un matériau à double réfraction de la lumière (3),
la structure de film (10) telle qu'obtenue à l'étape /2/ comportant le film substrat et la couche déposée d'au moins un matériau à double réfraction de la lumière.

9. Procédé selon l'une quelconque des revendications précédentes, dans lequel la couche d'au moins un matériau à double réfraction de la lumière (3) comprend plusieurs couches superposées de matériaux à double réfraction de la lumière respectifs.

10. Procédé selon l'une quelconque des revendications 1 à 9, dans lequel le verre ophtalmique produit corrige l'amétropie, le verre de base (1) étant adapté pour corriger au moins une partie de l'amétropie d'un porteur.

11. Procédé selon la revendication 10, dans lequel la surface optique (S1) du verre de base (1) est une surface complexe, avec des valeurs de courbure variant de façon continue entre au moins deux points contenus dans ladite surface optique.

12. Procédé selon l'une quelconque des revendications 1 à 9, dans lequel le verre de base (1) est adapté pour ne générer aucune correction d'amétropie au moins à l'intérieur d'une zone de vision contenue dans la surface optique (S1).

13. Procédé selon la revendication 12, dans lequel le verre de base (1) est adapté pour ne générer aucune correction d'amétropie sur la surface optique entière (S1).

14. Procédé de production d'une paire de lunettes appropriée pour regarder un dispositif d'affichage stéréoscopique basé sur la sélection d'une polarisation circulaire de la lumière, ledit procédé comprenant :
- la production de deux verres ophtalmiques dédiés respectivement aux yeux gauche et droit d'un porteur, par mise en oeuvre d'un procédé selon l'une quelconque des revendications précédentes pour chaque verre ophtalmique ; et
- l'assemblage des deux verres ophtalmiques avec une monture de lunettes.

15. Procédé selon la revendication 14, dans lequel la couche d'au moins un matériau à double réfraction de la lumière (3) est orientée dans chaque verre ophtalmique assemblé dans la monture de lunettes de telle sorte que chacun desdits verres ophtalmiques sélectionne une polarisation différente parmi deux polarisations circulaires de la lumière opposées.

16. Procédé selon la revendication 14, dans lequel la couche d'au moins un matériau à double réfraction de la lumière (3) est orientée dans chaque verre ophtalmique assemblé dans la monture de telle sorte que chacun desdits verres ophtalmiques sélectionne une même polarisation parmi deux polarisations circulaires de la lumière opposées.
